# EUROPEAN PATENT SPECIFICATION

(11) **EP 2 727 779 B1**
(45) Date of publication and mention of the grant of the patent: **12.07.2017**
(21) Application number: 13166719.8
(22) Date of filing: 06.05.2013
(51) Int. Cl.: B60S 1/38, B60S 1/40, B60S 1/42

(54) **Windshield wiper assembly that can reduce rubbing resistance and eliminate noise**
Scheibenwischeranordnung mit Fähigkeit zur Widerstandsverringerung und Geräuschbeseitigung
Ensemble formant essuie-glace qui peut réduire la résistance au frottement et éliminer le bruit

(30) Priority: 02.11.2012 TW 101140912
(43) Date of publication of application: 07.05.2014
(73) Proprietor: Faidek Corporation, Changhua County 502 (TW)
(72) Inventor: Kuo, Ming-Yi, 502 Changhua County (TW)
(74) Representative: Lang, Christian

(56) References cited:
- BE-A3- 1 009 182
- JP-A- S6 092 136
- JP-A- 2010 274 670

## Description

### BACKGROUND OF THE INVENTION

### Field of the Invention

The present invention relates to a windshield wiper and, more particularly, to a windshield wiper assembly for a car.

### Description of the Prior Art

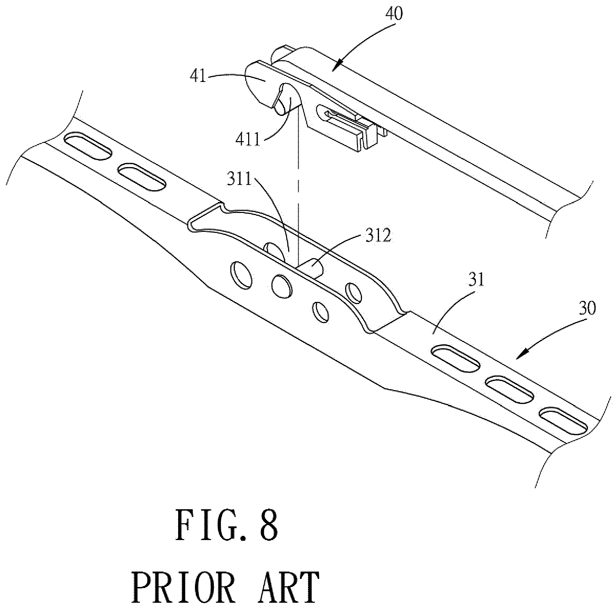

A conventional windshield wiper assembly for a car in accordance with the prior art shown in FIG. 8 comprises a support arm 40 having a connecting portion 41, and a wiper unit 30 connected with the connecting portion 41 of the support arm 40. The connecting portion 41 of the support arm 40 has a bottom provide with a snap-fit recess 411. The wiper unit 30 includes a blade 31 having a central portion provided with a hollow mounting seat 311, a resilient wiper (not shown) connected with the blade 31, and a connecting member 312 secured in the mounting seat 311 and connected with the connecting portion 41 of the support arm 40. The connecting member 312 is snapped into the snap-fit recess 411 of the connecting portion 41. In operation, the connecting member 312 is connected with the connecting portion 41 of the support arm 40 so that the wiper unit 30 is connected with the support arm 40. Thus, when the support arm 40 is driven by a drive motor and is pivoted on the windshield of a car, the wiper unit 30 is driven by the support arm 40 to move on the windshield so as to rub and clean the windshield by the wiper.

However, when the wiper is moved on the windshield to clear the grease, dirt, dust or contaminant deposited on the windshield, a drag is produced due to friction between the wiper and the windshield, so that the wiper easily produces vibration and noise during the movement of the wiper units 30. In addition, when the car is moved at a high speed, the air flow impacts the wiper of the wiper unit 30 and passes under the blade 31 to produce a vibration during the movement of the wiper unit 30 and to increase the frictional resistance of the wiper unit 30 due to an excessive force so that the wiper unit 30 is worn out and produces noise easily, thus decreasing the lifetime of the wiper unit 30, and easily causing an uncomfortable sensation to the driver in the car.

Another kind of windshield wiper is provided in patent JP 2010 274670. A rubber element is biased between the wiper arm and the wiper blade to fill any gap therebetween so that the wiper arm or the wiper blade may not be damaged during usage. However, the rubber element is compressed, so the wiper arm and the wiper blade are unable to move relative to each other along a width direction. Besides, the through hole on the side wall of the wiper blade is circular so that the axial movement of the wiper arm relative to the wiper blade is impossible. As a result, the windshield, wiper is unable to provide cushion along the axial direction of the wiper arm.

The present invention is, therefore, arisen to obviate or at least mitigate the above mentioned disadvantages.

### SUMMARY OF THE INVENTION

In accordance with the present invention, there is provided a windshield wiper assembly, comprising a support arm having a connecting portion, and a wiper unit connected with the connecting portion of the support portion. The wiper unit includes a blade having a central portion provided with a mounting seat, a resilient wiper connected with the blade, a movable bracket movably mounted in the mounting seat of the blade, at least one support pin secured on the mounting seat of the blade and extended through the movable bracket, and at least one elastic member mounted in the mounting seat of the blade and biased between the mounting seat of the blade and the movable bracket. The mounting seat of the wiper unit has an interior provided with a receiving chamber. The movable bracket of the wiper unit is received in the receiving chamber of the mounting seat and is connected with the connecting portion of the support arm. The movable bracket of the wiper unit has two sidewalls each provided with at least one through hole slidable on the support pin wherein the through hole is elongated and has a width along the longitudinal direction of the wiper unit larger than a width along the first direction. Each elastic member of the wiper unit is slidably mounted between the mounting seat and the movable bracket and is received in the receiving chamber of the mounting seat.

Thus, the movable bracket is moved relative to and deflected from the mounting seat of the blade when the wiper unit is driven by the support arm to reduce a frictional resistance applied on the wiper and the blade. In addition, the at least one elastic member provides a shock-absorbing function between the mounting seat of the blade and the movable bracket so as to eliminate vibration produced during the movement of the wiper unit.

The mounting seat of the wiper unit has a hollow shape. The mounting seat of the wiper unit has two opposite sidewalls each connected to the blade. The movable bracket of the wiper unit is movably mounted to the support pin and is movable relative to the mounting seat of the blade. The movable bracket of the wiper unit is spaced from and not connected with the mounting seat of the wiper unit. The at least one sidewall of the movable bracket is not connected with the sidewalls of the mounting seat.

The wiper unit further includes at least one bushing mounted on the support pin and located in the movable bracket. The bushing of the wiper unit has two opposite ends abutting against the movable bracket.

The wiper unit further includes at least one washer mounted on the support pin and located between the bushing and the movable bracket, and a connecting member or a lock connecting member secured in the movable bracket and connected with the connecting portion of the support arm.

The wiper unit further includes at least one tension adjusting plate mounted in the mounting seat of the blade and biased between the mounting seat of the blade and the at least one elastic member to adjust the tension of the at least one elastic member.

The wiper unit further includes a connecting member secured in the movable bracket and connected with the connecting portion of the support arm.

The primary objective of the present invention is to provide a windshield wiper assembly that can reduce rubbing resistance and eliminate noise.

According to the primary advantage of the present invention, the movable bracket is moved relative to and slightly deflected from the mounting seat of the blade during the pivotal movement of the wiper unit to reduce the frictional resistance applied on the wiper and the blade, so that the wiper unit is moved on the windshield smoothly and conveniently.

According to another advantage of the present invention, the elastic members are biased between the mounting seat of the blade and the movable bracket to provide a shock-absorbing function between the mounting seat of the blade and the movable bracket so as to efficiently reduce the vibration or shock produced during the movement of the wiper unit.

According to a further advantage of the present invention, the wiper unit is moved on the windshield smoothly so that the wiper is not worn out easily during a long-term utilization, thereby enhancing the lifetime of the wiper.

According to a further advantage of the present invention, the wiper unit is moved on the windshield smoothly so that the wiper unit will not interfere with operation of the drive motor, thereby enhancing the lifetime of the drive motor.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

FIG. 1 is a perspective view of a windshield wiper assembly in accordance with a preferred embodiment of the present invention;
FIG. 2 is an exploded perspective view of a windshield wiper assembly in accordance with a preferred embodiment of the present invention;
FIG. 3 is a top cross-sectional assembly view of the windshield wiper assembly as shown in FIG. 2;
FIG. 4 is a bottom perspective view of the windshield wiper assembly as shown in FIG. 2;
FIG. 5 is a perspective assembly operational view of the windshield wiper assembly as shown in FIG. 2;
FIG. 6 is a top cross-sectional operational view of the windshield wiper assembly as shown in FIG. 5;
FIG. 7 is a partial exploded perspective view of a windshield wiper assembly in accordance with another preferred embodiment of the present invention; and
FIG. 8 is an exploded perspective view of a conventional sucker in accordance with the prior art.

### DETAILED DESCRIPTION OF THE PREFERRED EMBODIMENTS

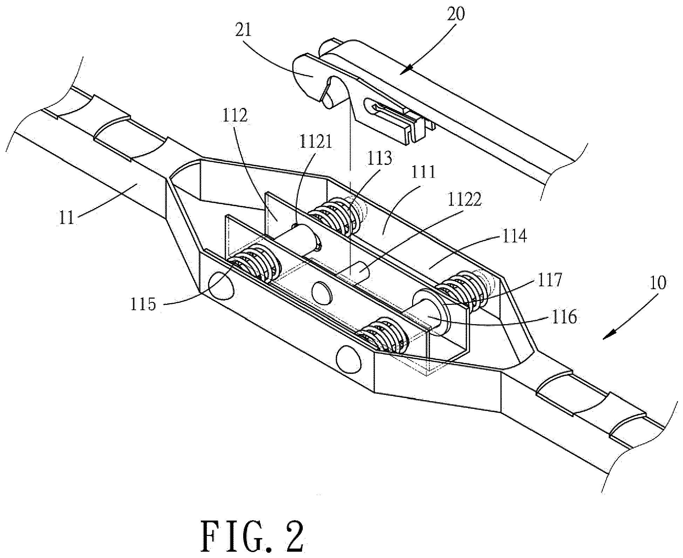

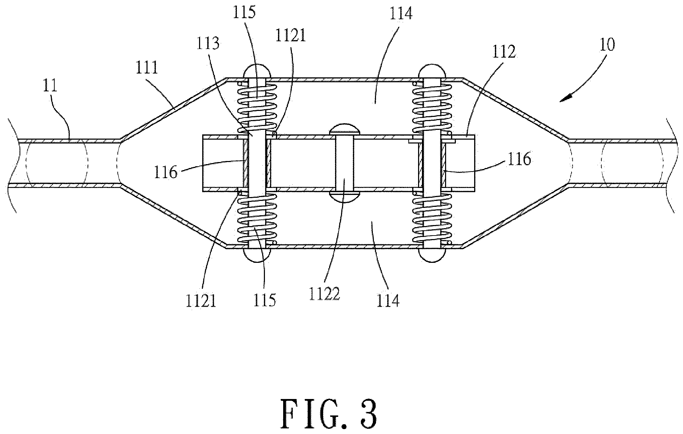

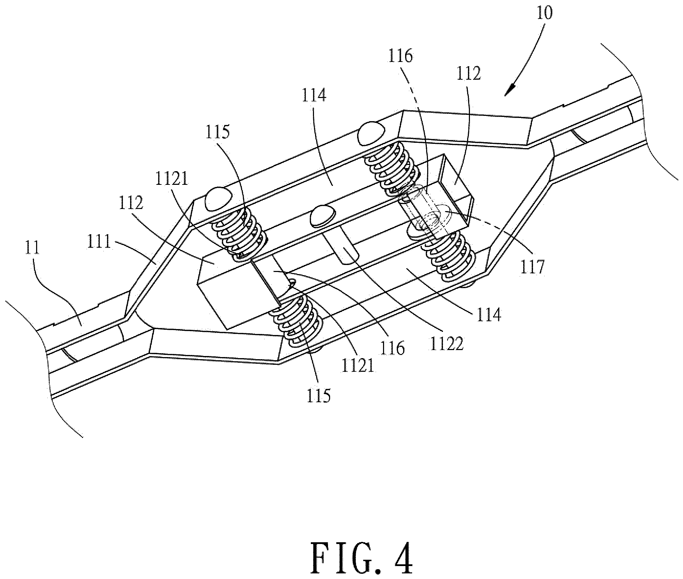

Referring to the drawings and initially to FIGS. 2-6, a windshield wiper assembly for a car in accordance with a preferred embodiment of the present invention comprises a support arm 20 having a connecting portion 21, and a wiper unit 10 connected with the connecting portion 21 of the support arm 20.

The wiper unit 10 includes a blade 11 having a central portion provided with a mounting seat 111, a resilient wiper 12 connected with the blade 11, a movable bracket 112 movably mounted in the mounting seat 111 of the blade 11, at least one support pin 113 secured on the mounting seat 111 of the blade 11 and extended through the movable bracket 112, and at least one pair of elastic members 115 each mounted in the mounting seat 111 of the blade 11 and each biased between the mounting seat 111 of the blade 11 and the movable bracket 112.

The mounting seat 111 of the wiper unit 10 has a hollow shape and has an interior provided with a receiving chamber 114. The mounting seat 111 of the wiper unit 10 has two opposite sidewalls each connected to the blade 11. The movable bracket 112 of the wiper unit 10 is received in the receiving chamber 114 of the mounting seat 111 and is connected with the connecting portion 21 of the support arm 20. The movable bracket 112 of the wiper unit 10 is movable on the support pin 113 and is movable relative to the mounting seat 111 of the blade 11. The movable bracket 112 of the wiper unit 10 has a substantially U-shaped profile and has two opposite sidewalls each provided with at least one through hole 1121 slidable on the support pin 113. The through hole 1121 of the movable bracket 112 has an oblong shape. The movable bracket 112 of the wiper unit 10 is biased between the elastic members 115. The movable bracket 112 of the wiper unit 10 is spaced from and not connected with the mounting seat 111 of the wiper unit 10. The sidewalls of the movable bracket 112 are not connected with the sidewalls of the mounting seat 111. Each of the elastic members 115 of the wiper unit 10 is mounted on the support pin 113 and is received in the receiving chamber 114 of the mounting seat 111. The support pin 113 of the wiper unit 10 is received in the receiving chamber 114 of the mounting seat 111.

The wiper unit 10 further includes at least one bushing 116 mounted on the support pin 113 and located in the movable bracket 112, at least one washer 117 mounted on the support pin 113 and located between the bushing 116 and the movable bracket 112, and a connecting member 1122 secured in the movable bracket 112 and connected with the connecting portion 21 of the support arm 20. The bushing 116 of the wiper unit 10 has two opposite ends abutting against the sidewalls of the movable bracket 112 to reinforce the whole strength of the movable bracket 112.

In the preferred embodiment of the present invention, the wiper unit 10 includes two support pins 113, two pairs of elastic members 115, and two bushings 116, and each of the sidewalls of the mounting seat 111 is provided with two through holes 1121. The connecting member 1122 is disposed between the support pins 113.

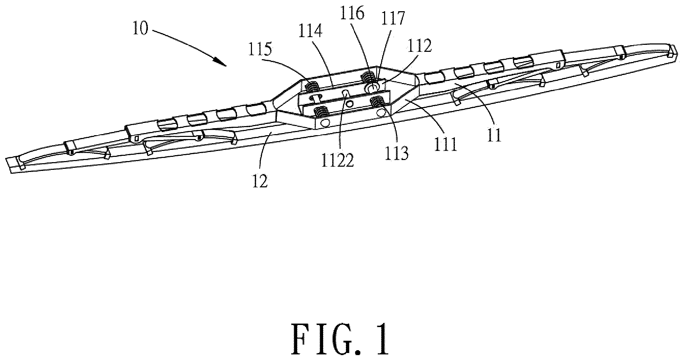

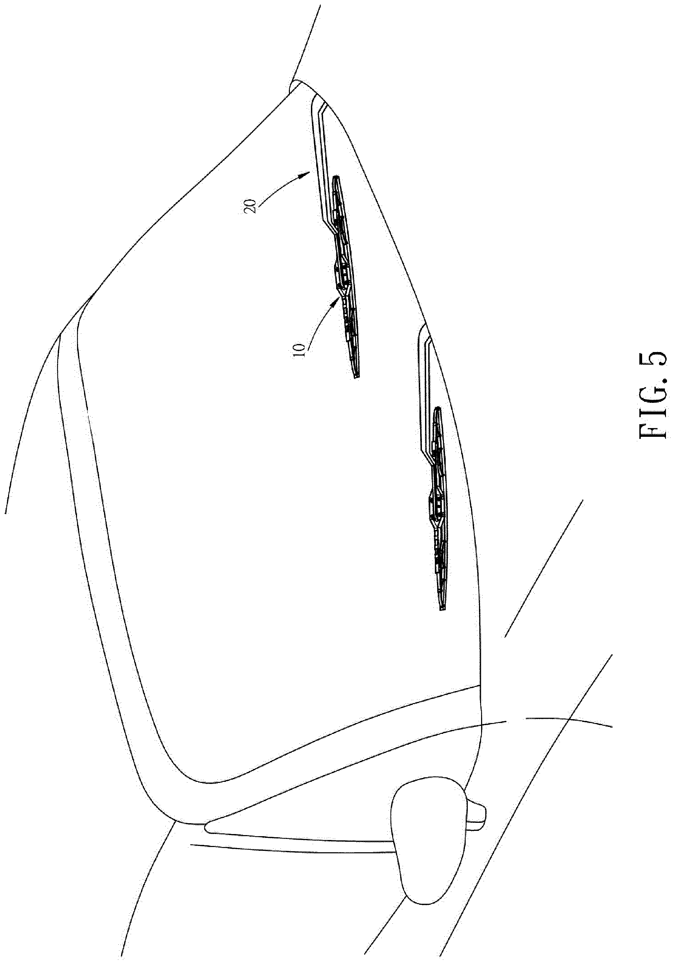

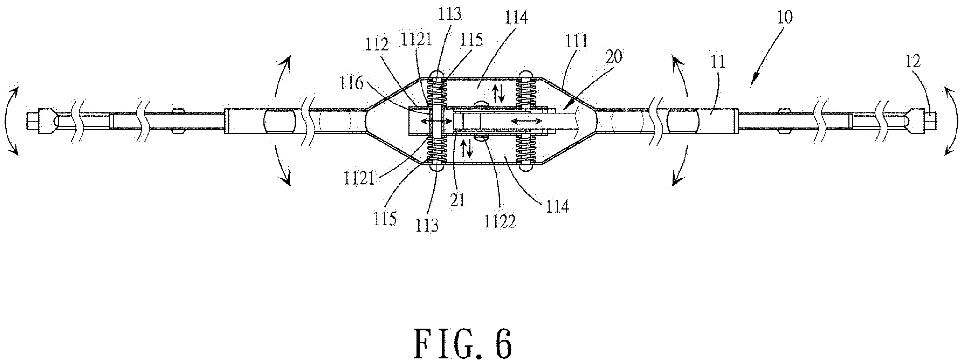

In operation, referring to FIGS. 5 and 6 with reference to FIGS. 1-4, the connecting member 1122 of the wiper unit 10 is connected with the connecting portion 21 of the support arm 20 so that the wiper unit 10 is connected with the support arm 20. Thus, when the support arm 20 is driven by a drive motor and is pivoted on the windshield of a car, the wiper unit 10 is driven by the support arm 20 to move on the windshield so as to rub and clean the windshield by the wiper 12. At this time, the movable bracket 112 is moved relative to and deflected from the mounting seat 111 of the blade 11 when the wiper unit 10 is driven by the support arm 20 to reduce the frictional resistance applied on the wiper 12 and the blade 11, so that the wiper unit 10 is moved on the windshield smoothly and conveniently. In addition, the elastic members 115 are biased between the mounting seat 111 of the blade 11 and the movable bracket 112 to provide a shock-absorbing function between the mounting seat 111 of the blade 11 and the movable bracket 112 so as to eliminate vibration or shock produced during the movement of the wiper unit 10.

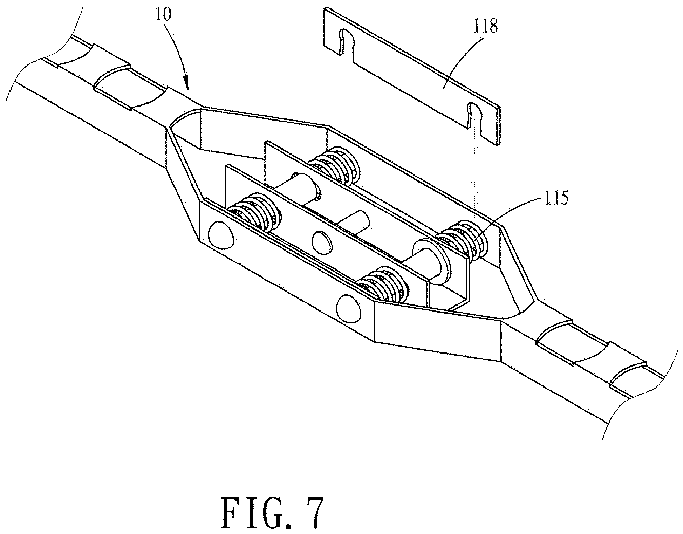

Referring to FIG. 7, the wiper unit 10 further includes at least one tension adjusting plate 118 mounted in the mounting seat 111 of the blade 11 and biased between the mounting seat 111 of the blade 11 and the elastic members 115 to adjust the tension of the elastic members 115. Thus, when the elasticity of the elastic members 115 fatigues, the tension adjusting plate 118 can be received in the receiving chamber 114 of the mounting seat 111 and is biased between the mounting seat 111 of the blade 11 and the elastic members 115 to further compress the elastic members 115 so as to adjust the tension of the elastic members 115.

Accordingly, the movable bracket 112 is moved relative to and slightly deflected from the mounting seat 111 of the blade 11 during the pivotal movement of the wiper unit 10 to reduce the frictional resistance applied on the wiper 12 and the blade 11, so that the wiper unit 10 is moved on the windshield smoothly and conveniently. In addition, the elastic members 115 are biased between the mounting seat 111 of the blade 11 and the movable bracket 112 to provide a shock-absorbing function between the mounting seat 111 of the blade 11 and the movable bracket 112 so as to efficiently reduce the vibration or shock produced during the movement of the wiper unit 10. Furthermore, the wiper unit 10 is moved on the windshield smoothly so that the wiper 12 is not worn out easily during a long-term utilization, thereby enhancing the lifetime of the wiper 12. Furthermore, the wiper unit 10 is moved on the windshield smoothly so that the wiper unit 10 will not interfere with operation of the drive motor, thereby enhancing the lifetime of the drive motor.

Although particular embodiments of the invention have been described in detail for purposes of illustration, various modifications and enhancements may be made without departing from the appended claims.

## Claims

1. A windshield wiper assembly, comprising:
a support arm (20) having a connecting portion (21); and
a wiper unit (10) connected with the connecting portion (21) of the support arm (20), the wiper unit (10) defining a longitudinal direction; wherein
the wiper unit (10) includes:
a blade (11) having a central portion provided with a mounting seat (111);
a resilient wiper (12) connected with the blade (11);
a movable bracket (112) movably mounted in the mounting seat (111) of the blade (11);
at least one support pin (113) secured on the mounting seat (111) of the blade (11) and extended through the movable bracket (112), the support pin (113) defining an axial direction which is perpendicular to the longitudinal direction of the wiper unit (10), a first direction being defined to be perpendicular to both the longitudinal direction of the wiper unit (10) and the axial direction of the support pin (113); and
at least one elastic member (115) mounted in the mounting seat (111) of the blade (11) and biased between the mounting seat (111) or the blade (11) and the movable bracket (112);
the mounting seat (111) of the wiper unit (10) has an interior provided with a receiving chamber (114);
the movable bracket (112) of the wiper unit (10) is received in the receiving chamber (114) of the mounting seat (111) and is connected with the connecting portion (21) of the support arm (20);
each elastic member (115) of the wiper unit (10) is slidably mounted between the mounting seat (111) and the movable bracket (112) and is received in the receiving chamber (114) of the mounting seat (111);
the movable bracket (112) is moved relative to and deflected from the mounting seat (111) of the blade (11) when the wiper unit (10) is driven by the support arm (20) to reduce frictional resistance applied on the wiper (12) and the blade (11); and
the at least one elastic member (115) provides a shock-absorbing function between the mounting seat (111) of the blade (11) and the movable bracket (112) so as to eliminate vibration produced during movement of the wiper unit (10), **characterized in that** the movable bracket (112) of the wiper unit (10) has at least two sidewalls each provided with at least one through hole (1121) slidable on the support pin (113) wherein the through hole (1121) is elongated and has a width along the longitudinal direction of the wiper unit (10) larger than a width along the first direction.

2. The windshield, wiper assembly of claim 1, wherein:
the mounting seat (111) of the wiper unit (10) has a hollow shape;
the mounting seat (111) of the wiper unit (10) has two opposite sidewalls each connected to the blade (11);
the movable bracket (112) or the wiper unit (10) is movably mounted to the support pin (113) and is movable relative to the mounting seat (111) of the blade (11);
the movable bracket (112) of the wiper unit (10) is spaced from and not connected with the mounting seat (111) of the wiper unit (10); and
the at least one sidewall of the movable bracket (112) is not connected with the sidewalls of the mounting seat (111).

3. The windshield, wiper assembly of claim 1, wherein:
the wiper unit (10) further includes at least one bushing (116) mounted on the support pin (113) and located in the movable bracket (112); and
the bushing (116) of the wiper unit (10) has two opposite ends abutting against the movable bracket (112).

4. The windshield wiper assembly of claim 3, wherein the wiper unit (10) further includes at least one washer (117) mounted on the support pin (113) and located between the bushing (116) and the movable bracket (112).

5. The windshield wiper assembly of claim 1, wherein the wiper unit (10) further includes at least one tension adjusting plate (118) mounted in the mounting seat (111) of the blade (11) and biased between the mounting seat (111) of the blade (11) and the at least one elastic member (115) to adjust tension of the at least one elastic member (115).

6. The windshield wiper assembly of claim 1, wherein the wiper unit (10) further includes a connecting member (1122) secured in the movable bracket (112) and connected with the connecting portion (21) of the support arm (20).

## Patentansprüche

1. Scheibenwischeranordnung, umfassend:
einen Trägerarm (20) mit einen Verbindungsteil (21) und
eine Wischereinheit (10), die mit dem Verbindungsteil (21) des Trägerarms (20) verbunden ist,
wobei die Wischereinheit (10) eine Längsrichtung definiert, wobei
die Wischereinheit (10) beeinhaltet:
ein Blatt (11) mit einem mittigen Abschnitt, der mit einem Befestigungssitz (111) versehen ist,
einen nachgiebigen Wischer (12), der mit dem Blatt (11) verbunden ist,
eine bewegbare Halterung (112), die beweglich in dem Befestigungssitz (111) des Blatts (11) montiert ist,
wenigstens einen Stützstift (113), der an dem Befestigungssitz (111) des Blatts (11) fixiert ist und sich durch die bewegbare Halterung (112) erstreckt, wobei der Stützstift (113) eine axiale Richtung definiert, welche senkrecht zur Längsrichtung der Wischereinheit (10) ist, wobei eine erste Richtung so definiert ist, dass diese sowohl zur Längsrichtung der Wischereinheit (10) als auch zur axialen Richtung des Stützstifts (113) senkrecht ist, und
wenigstens ein elastisches Element (115), das in dem Befestigungssitz (111) des Blatts (11) angebracht ist und zwischen dem Befestigungssitz (111) des Blatts (11) und der bewegbaren Halterung (112) vorgespannt ist,
wobei der Befestigungssitz (111) der Wischereinheit (10) einen Innenraum hat, der mit einer Aufnahmekammer (114) ausgebildet ist,
wobei die bewegbare Halterung (112) der Wischereinheit (10) in der Aufnahmekammer (114) des Befestigungssitzes (111) aufgenommen ist und mit dem Verbindungsteil (21) des Trägerarms (20) verbunden ist,
wobei jedes elastische Element (115) der Wischereinheit (10) verschiebbar zwischen dem Befestigungssitz (111) und der bewegbaren Halterung (112) angebracht ist und in der Aufnahmekammer (114) des Befestigungssitzes (111) aufgenommen ist,
wobei die bewegbare Halterung (112) relativ zu dem Befestigungssitz (111) des Blatts (11) bewegt und von diesem ausgelenkt wird, wenn die Wischereinheit (10) durch den Trägerarm (20) angetrieben wird, um den Reibungswiderstand zu reduzieren, der auf den Wischer (12) und das Blatt (11) wirkt, und
wobei das wenigstens eine elastische Element (115) eine stoßdämpfende Funktion zwischen dem Befestigungssitz (111) des Blatts (11) und der bewegbaren Halterung (112) bereitstellt,
um Vibrationen zu beseitigen, die während der Bewegung der Wischereinheit (10) entstehen,
**dadurch gekennzeichnet, dass** die bewegbare Halterung (112) der Wischereinheit (10) wenigstens zwei Seitenwände hat, von denen jede mit wenigstens einem Durchgangsloch (1121) versehen ist, das an dem Stützstift (113) verschiebbar ist, wobei das Durchgangsloch (1121) länglich ist und entlang der Längsrichtung der Wischereinheit (10) eine Weite hat, die größe ist als eine Weite entlang der ersten Richtung.

2. Scheibenwischeranordnung nach Anspruch 1, bei welcher:
der Befestigungssitz (1.1.1.) der Wischereinheit (10) eine hole Form hat,
der Befestigungssitz (111) der Wischereinheit (10) zwei gegenüberliegende Seitenwände hat,
die jeweils mit dem Blatt (11) verbunden sind,
die bewegbare Halterung (112) der Wischereinheit (10) beweglich an dem Stützstift (113) angebracht ist und in Bezug auf den Befestigungssitz (111) des Blatts (11) beweglich ist,
die bewegbare Halterung (112) der Wischereinheit (10) von dem Befestigungssitz (111) der Wischereinheit (10) beabstandet ist und nicht mit diesem verbunden ist, und
die wenigstens eine Seitenwand der bewegbaren Halterung (112) nicht mit den Seitenwänden des Befestigungssitzes (111) verbunden ist.

3. Scheibenwischeranordnung nach Anspruch 1, bei welcher:
die Wischereinheit (10) ferner wenigstens eine Hülse (116) umfasst, die an dem Stützstift (113) montiert ist und sich in der bewegbaren Halterung (112) befindet, und
die Hülse (116) der Wischereinheit (10) zwei gegenüberliegende Enden hat, die an der bewegbaren Halterung (112) anliegen

4. Scheibenwischeranordnung nach Anspruch 3, bei welcher die Wischereinheit (10) ferner wenigstens eine Unterlegscheibe (117) umfasst, die an dem Stützstift (113) angebracht ist und sich zwischen der Hülse (116) und der bewegbaren Halterung (112) befindet.

5. Scheibeirwiseheranordnung nach Anspruch 1, bei welcher die Wischereinheit (10) ferner wenigstens eine Spanmrngsanpassungsplatte (118) beinhaltet, die in dem Befestigungssitz (111) des Blatts (11) montiert ist und zwischen dem Befestigungssitz (111) des Blatts (11) und dem wenigstens einem elastischen Element (115) eingespannt ist, um eine Spannung des wenigstens einen elastischen Elements (115) einzustellen.

6. Scheibenwischeranordnung nach Anspruch 1, bei welcher die Wischereinheit (10) ferner ein Verbindungselement (1122) umfasst, das in der bewegbaren Halterung (112) fixiert ist und mit dem Verbindungsteil (21) des Trägerarm (20) verbunden ist.

## Revendications

1. Ensemble essuie-glace de pare-brise, comprenant :
un bras de support (20) ayant une portion de raccordement (21) ; et
une unité d'essuie-glace (10) raccordée à la portion de raccordement (21) du bras de support (20), l'unité d'essuie-glace (10) définissant une direction longitudinale ; dans lequel l'unité d'essuie-glace (10) comporte :
un balai (11) ayant une portion centrale pourvue d'une assise de montage (111) ;
un essuie-glace résiliant (12) raccordé au balai (11) ;
une console mobile (112) montée mobile dans l'assise de montage (111) du balai (11) ;
au moins une broche de support (113) arrimée sur l'assise de montage (111) du balai (11) et étendue à travers la console mobile (112), la broche de support (113) définissant une direction axiale qui est perpendiculaire à la direction longitudinale de l'unité d'essuie-glace (10), une première direction étant définie pour être perpendiculaire à la fois à la direction longitudinale de l'unité d'essuie-glace (10) et à la direction axiale de la broche de support (113) ; et
au moins un organe élastique (115) monté dans l'assise de montage (111) du balai (11) et sollicité entre l'assise de montage (111) du balai (111) et la console mobile (112) ;
l'assise de montage (111) de l'unité d'essuie-glace (10) a un intérieur pourvu d'une chambre de réception (114) ;
la console mobile (112) de l'unité d'essuie-glace (10) est reçue dans la chambre de réception (114) de l'assise de montage, (111) et est raccordée à la portion de raccordement (21) du bras de support (20) ;
chaque organe élastique (115) de l'unité d'essuie-glace (10) est monté coulissant entre l'assise de montage (111) et la console mobile (112) et est reçu dans la chambre de réception (114) de l'assise de montage (111) ;
la console mobile (112) est déplacée et défléchie par rapport à l'assise de montage (111) du balai (11) lorsque l'unité d'essuie-glace (10) est entraînée par le bras de support (20) pour réduire une résistance de frottement appliquée sur l'essuie-glace (12) et le balai (11) ; et
l'au moins un organe élastique (115) assure une fonction d'absorption de choc entre l'assise de montage (111) du balai (11) et la console mobile (112) de façon à éliminer une vibration produite pendant un déplacement de l'unité d'essuie-glace (10), **caractérisé en ce que** la console mobile (112) de l'unité d'essuie-glace (10) a au moins deux parois latérales pourvues chacune d'au moins un trou traversant (1121) coulissant sur la broche de support (113) dans lequel le trou traversant (1121) est allongé et a une largeur le long de la direction longitudinale de l'unité d'essuie-glace (10) plus grande qu'une largeur le long de la première direction.

2. Ensemble essuie-glace de pare-brise selon la revendication 1, dans lequel :
l'assise de montage (111) de l'unité d'essuie-glace (10) a une forme creuse ;
l'assise de montage (111) de l'unité d'essuie-glace (10) a deux parois latérales opposées raccordées chacune au balai (11) ;
la console mobile (112) de l'unité d'essuie-glace (10) est montée mobile sur la broche de support (113) et est mobile par rapport à l'assise de montage (111) du balai (11) ;
la console mobile (112) de l'unité d'essuie-glace (10) est espacée de et non raccordée à l'assise de montage (111) de l'unité d'essuie-glace (10) ; et
l'au moins une paroi latérale de la console mobile (112) n'est pas raccordée aux parois latérales de l'assise de montage (111).

3. Ensemble essuie-glace de pare-brise selon la revendication 1, dans lequel :
l'unité d'essuie-glace (10) comporte en outre au moins une douille (116) montée sur la broche de support (113) et située dans la console mobile (112) ; et
la douille (116) de l'unité d'essuie-glace (10) a deux extrémités opposées en butée contre la console mobile (112).

4. Ensemble essuie-glace de pare-brise selon la revendication 3, dans lequel l'unité d'essuie-glace (10) comporte en outre au moins une rondelle (117) montée sur la broche de support (113) et située entre la douille (116) et la console mobile (112).

5. Ensemble essuie-glace de pare-brise selon la revendication 1, dans lequel l'unité d'essuie-glace (10) comporte en outre au moins une plaque de réglage de tension (118) montée dans l'assise de montage (111) du balai (11) et sollicité entre l'assise de montage (111) du balai (11) et l'au moins un organe élastique (115) pour régler une tension de l'au moins un organe élastique (115).

6. Ensemble essuie-glace de pare-brise selon la revendication 9, dans lequel l'unité d'essuie-glace ('10) comporte en outre un organe de raccordement (1122) arrimé dans la console mobile (112) et raccordé à la portion de raccordement (21) du bras de support (20).
